# FASCICULE DE BREVET EUROPEEN

(11) **EP 2 022 682 B1**
(45) Date de publication et mention de la délivrance du brevet: **17.02.2010**
(21) Numéro de dépôt: 08161279.8
(22) Date de dépôt: 28.07.2008
(51) Int. Cl.: B60R 19/34

(54) **Structure de caisse de véhicule automobile et véhicule comportant une telle structure de caisse.**
Karosseriestruktur eines Kraftfahrzeugs und eine solche Karosseriestruktur umfassendes Kraftfahrzeug
Automobile body structure and vehicle comprising such a structure.

(30) Priorité: 03.08.2007 FR 0705710
(43) Date de publication de la demande: 11.02.2009
(73) Titulaire: Hydro Aluminium Alunord, 27400 Louviers (FR); PEUGEOT CITROËN AUTOMOBILES S.A., 78140 Vélizy Villacoublay (FR)
(72) Inventeur: Jambut, Jean-François, 27310, Saint-Ouen De Thouberville (FR); Leclercq, Jean-Philippe, 76220, Ferrieres en Bray (FR); Gauthier, Jean-Pierre, 94800, Villejuif (FR); Travert, Franck, 92160, ANTONY (FR)
(74) Mandataire: Cabinet Plasseraud

(56) Documents cités:
- EP-A- 0 926 049
- WO-A-2004/113131
- DE-U- 20 013 385
- US-A- 5 460 421

## Description

L'invention concerne les structures de caisse de véhicules automobiles et véhicules automobiles comportant de telles structures de caisse.

L'invention concerne plus particulièrement une structure de caisse de véhicule automobile comportant :
- des première et deuxième parties de caisse déplaçables l'une par rapport à l'autre dans une direction longitudinale,
- un absorbeur d'énergie qui comprend un organe déchirable lié à la première partie de caisse,
- un dispositif de verrouillage comprenant au moins un organe de verrouillage mobile entre :
- une position de verrouillage où ledit organe de verrouillage lie l'organe déchirable à la deuxième partie de caisse et où ledit organe de verrouillage est adapté pour déchirer l'organe déchirable en dissipant de l'énergie lors d'un choc appliqué à l'une des première et deuxième parties de caisse dans ladite direction longitudinale,
- et une position escamotée où ledit organe de verrouillage permet un mouvement relatif entre ledit organe déchirable et la deuxième partie de caisse sans interférer avec l'organe déchirable,
ledit organe de verrouillage étant, initialement et en absence d'un choc appliqué à l'une des première et deuxième parties de caisse, en position de verrouillage.

Le document WO 2004/113131 décrit un exemple d'une telle structure de caisse de véhicule, dans lequel des organes de verrouillage sont commandés pour sélectivement, soit pénétrer dans l'organe de déchirement, soit s'en retirer, en fonction de la vitesse du véhicule. Cette structure de caisse connue nécessite un actionneur encombrant.

DE 20013385 U divulgue une structure de caisse selon le préambule de la revendication 1.

La présente invention a notamment pour but de pallier ces inconvénients.

A cet effet, une structure de caisse de véhicule automobile du type précité est caractérisée en ce que le dispositif de verrouillage comporte en outre un organe de blocage commandé pour se déplacer entre une position active où ledit organe de blocage bloque l'organe de verrouillage en position de verrouillage, et une position inactive où ledit organe de blocage n'interfère pas avec l'organe de verrouillage de telle sorte que l'organe de verrouillage reste en position de verrouillage en absence d'un choc appliqué à l'une des première et deuxième parties de caisse.

Grâce à ces dispositions, l'énergie du choc est utilisée pour déplacer l'organe de verrouillage vers la position escamotée. L'actionnement utilisé dans la structure de caisse n'est pas utilisé pour commander le changement de position dudit organe de verrouillage entre la position du verrouillage et la position escamotée, mais plutôt le changement d'état de l'organe de verrouillage par action sur l'organe de blocage du dispositif de verrouillage. Il est alors possible d'utiliser un actionneur relativement peu coûteux et peu encombrant, de sorte qu'il peut éventuellement être possible de loger l'ensemble du dispositif de verrouillage, y compris son actionneur, à l'intérieur de l'absorbeur d'énergie. Le passage de l'état bloqué à l'état débloqué peut en outre être spécialement rapide, grâce aux dispositions précitées.

Dans divers modes de réalisation de la structure de caisse selon l'invention, on peut éventuellement avoir recours en outre à l'une et/ou à l'autre des dispositions suivantes :
- l'organe de verrouillage est déplaçable dans sa position escamotée sous l'effet d'un choc appliqué à l'une des première et deuxième parties de caisse lorsque ledit organe de blocage est en position inactive.
- l'organe de verrouillage est sollicité élastiquement vers la position de verrouillage ;
- l'organe de verrouillage coopère par effet de came avec un élément solidaire d'une des première et deuxième parties de caisse pour déplacer ledit organe de verrouillage en position escamotée en cas de choc dans la direction longitudinale lorsque l'organe de blocage est en position inactive ;
- le dispositif de verrouillage comprend au moins deux organes de verrouillage solidaires de deux bras montés pivotants en ciseaux autour d'un axe de rotation commun, lesdits bras étant disposés pour se rapprocher l'un de l'autre lorsque les organes de verrouillage se déplacent de la position de verrouillage à la position escamotée, et l'organe de blocage étant disposé pour s'intercaler entre lesdits deux bras pour bloquer les organes de verrouillage en position de verrouillage lorsque ledit organe de blocage est en position de blocage ;
- la première partie de caisse comprend une poutre transversale de pare-choc s'étendant sensiblement perpendiculairement à la direction longitudinale et la deuxième partie de caisse comprend un brancard s'étendant sensiblement dans ladite direction longitudinale ;
- l'organe déchirable comprend un profilé s'étendant dans la direction longitudinale, ledit organe déchirable comprenant au moins un trou et au moins une ligne de faiblesse s'étendant à partir du trou dans ladite direction longitudinale, l'organe de verrouillage étant adapté pour pénétrer dans le trou lorsqu'il est en position verrouillée, la ligne de faiblesse étant adaptée pour être déchirée par ledit organe de verrouillage en cas de choc appliqué à l'une des première et deuxième parties de caisse dans la direction longitudinale ;
- l'organe de verrouillage est adapté pour traverser le trou de l'organe déchirable et se verrouiller sur un organe de réception solidaire de la deuxième partie de caisse lorsque ledit organe de verrouillage est en position de verrouillage ;
- l'organe déchirable est un profilé creux et le dispositif de verrouillage est disposé dans ledit organe déchirable ;
- le dispositif de verrouillage est fixé à l'organe déchirable par une liaison frangible ;
- le dispositif de verrouillage comprend au moins deux organes de verrouillage solidaires de deux bras montés pivotants en ciseaux autour d'un axe de rotation commun solidaire d'un support lié à l'organe déchirable par ladite liaison frangible, lesdits organes de verrouillage et lesdits bras étant disposés pour se rapprocher l'un de l'autre lorsque les organes de verrouillage se déplacent de la position de verrouillage à la position escamotée, l'organe de blocage étant disposé pour s'intercaler entre lesdits deux bras pour les bloquer les organes de verrouillage en position de verrouillage lorsque ledit organe de blocage est en position de blocage ; les organes de verrouillage sont adaptés pour buter contre l'organe de réception lors d'un choc dans la direction longitudinale, dans un sens tendant à rapprocher les deux bras l'un de l'autre ; et les organes de verrouillage coopèrent par effet de came avec ledit organe de réception pour déplacer lesdits organes de verrouillage en position escamotée en cas de choc dans la direction longitudinale lorsque l'organe de blocage est en position inactive ;
- le dispositif de verrouillage comprend en outre un actionneur adapté pour déplacer ledit organe de blocage, et ledit actionneur comporte un électroaimant comportant un noyau magnétique mobile en translation et solidaire dudit organe de blocage.

Par ailleurs, l'invention a également pour objet un véhicule automobile comprenant une structure de caisse telle que définie ci-dessus, dans lequel le dispositif de verrouillage comprend en outre un actionneur adapté pour déplacer ledit organe de blocage, et dans lequel une électronique de commande est reliée à au moins un capteur et commande ledit actionneur pour que ledit organe de blocage soit en position inactive sous certaines conditions de déblocage fonction d'informations reçues dudit capteur et pour qu'il soit en position active sinon. Dans divers modes de réalisation du véhicule selon l'invention, on peut éventuellement avoir recours en outre à l'une et / ou à l'autre des dispositions suivantes :
- le capteur est adapté pour mesurer une vitesse du véhicule et lesdites conditions de déblocage incluent au moins une condition de vitesse selon laquelle la vitesse du véhicule est comprise dans une plage de vitesse prédéterminée.
- ledit capteur est un détecteur d'obstacle et lesdites conditions de déblocage incluent au moins une condition de détection d'obstacle selon laquelle un obstacle est détecté à proximité dudit véhicule.

D'autres caractéristiques et avantages de l'invention apparaîtront au cours de la description suivante d'un de ses modes de réalisation, donné à titre d'exemple non limitatif, en regard des dessins joints.

Sur les dessins :
- la figure 1 est une vue écorchée en perspective d'un véhicule automobile avec une structure de caisse conforme à l'invention,
- la figure 2 est une vue agrandie d'une partie de la structure de caisse de la figure 1,
- la figure 3 est une vue de dessus partiellement écorchée de l'absorbeur d'énergie de la structure de caisse de la figure 1,
- la figure 4 est une vue en coupe transversale de l'absorbeur d'énergie selon la ligne IV-IV de la figure 3, montrant un dispositif de verrouillage contenu dans l'absorbeur d'énergie, ce dispositif étant en position de verrouillage et dans un état bloqué,
- la figure 5 est une vue en perspective du dispositif de verrouillage de la figure 4, dans son état bloqué,
- et les figures 6 à 8 sont des vues similaires à la figure 4, lorsque le dispositif de verrouillage est dans un état débloqué, ce dispositif étant en position de verrouillage sur la figure 6, en cours de déverrouillage sur la figure 7 et déverrouillé sur la figure 8.

Sur les différentes figures, les mêmes références désignent des éléments identiques ou similaires.

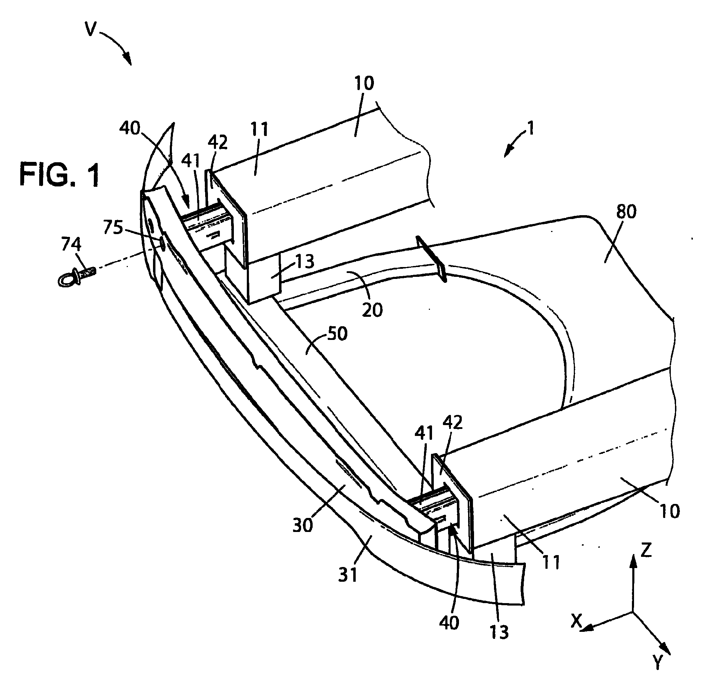

La figure 1 représente une vue écorchée en perspective d'un véhicule automobile V ayant une structure de caisse 1, pour supporter des organes mécaniques du véhicule, par exemple un moteur à combustion interne avec une boite de vitesse.

La structure de caisse 1 peut comporter par exemple, tel que cela est usuel, deux brancards supérieurs métalliques 10 à section creuse, solidarisés à une cellule d'habitacle automobile (non représentée) et supportant cette cellule d'habitacle. Ces brancards supérieurs 10 s'étendent chacun sensiblement selon l'axe longitudinal X du véhicule et supportent chacun, à leur extrémité avant 11, une jambe de suspension métallique 13 s'étendant vers le bas, sensiblement selon un axe vertical Z.

Les extrémités avant 11 des brancards supérieurs sont fixés à une poutre métallique 30 de pare-choc qui s'étend sensiblement selon un axe transversal Y perpendiculaire aux axes X et Z et qui est recouverte par une peau de pare-choc 31 partiellement représentée en figure 1. La liaison entre les extrémités avant 11 des brancards supérieurs et la poutre 30 est réalisée par des absorbeurs d'énergie 40, décrits de manière plus détaillée ci-dessous.

La structure de caisse 1 peut par exemple comprendre en outre :
- deux brancards inférieurs 20, qui s'étendent sensiblement parallèlement aux brancards supérieurs 10, chaque brancard inférieur 20 étant lié rigidement à une des jambes de suspension 13,
- une traverse inférieure 50 reliant rigidement les extrémités avant des deux brancards inférieurs 20 (cette traverse 50 peut par exemple être utilisée pour supporter le radiateur du véhicule).

Les extrémités arrière des brancards inférieurs 20, quant à elles, peuvent par exemple être liées rigidement à un berceau moteur 80, lui-même habituellement fixé sous la cellule d'habitacle automobile (non représentée).

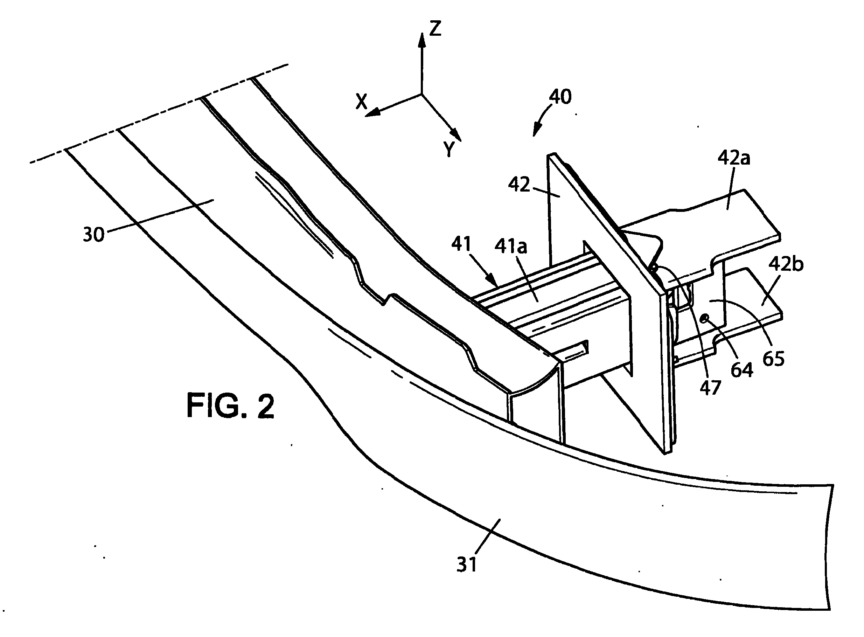

L'un de ces absorbeurs d'énergie 40 est présenté de manière agrandie en figure 2, avec une portion de la poutre 30 et de la peau de pare-choc 31.

Dans l'exemple considéré ici, l'absorbeur d'énergie 40 comprend :
- un profilé déchirable 41 métallique, s'étendant sensiblement selon la direction longitudinale X, ce profilé déchirable présentant par exemple une section creuse sensiblement rectangulaire (la partie arrière de ce profilé 41 a ici été omise pour plus de clarté),
- une platine de fixation 42 métallique s'étendant sensiblement dans le plan Y, Z et ayant une ouverture de forme complémentaire du profilé déchirable dans laquelle ledit profilé est engagé.

La platine de fixation 42 se prolonge vers l'arrière par deux ailes 42a, 42b, respectivement supérieure et inférieure, qui s'étendent sensiblement dans le plan X, Y. Ces ailes 42a, 42b sont engagées dans les ouvertures frontales des extrémités avant 11 des brancards supérieurs. Par exemple, la platine de fixation 42 peut être solidarisée avec lesdites extrémités avant 11 des brancards supérieurs par vissage, et l'extrémité avant 45 du profilé déchirable 41 peut être solidarisée avec la poutre 30 de pare-choc par tout moyen connu, par exemple par soudage ou assemblage vissé.

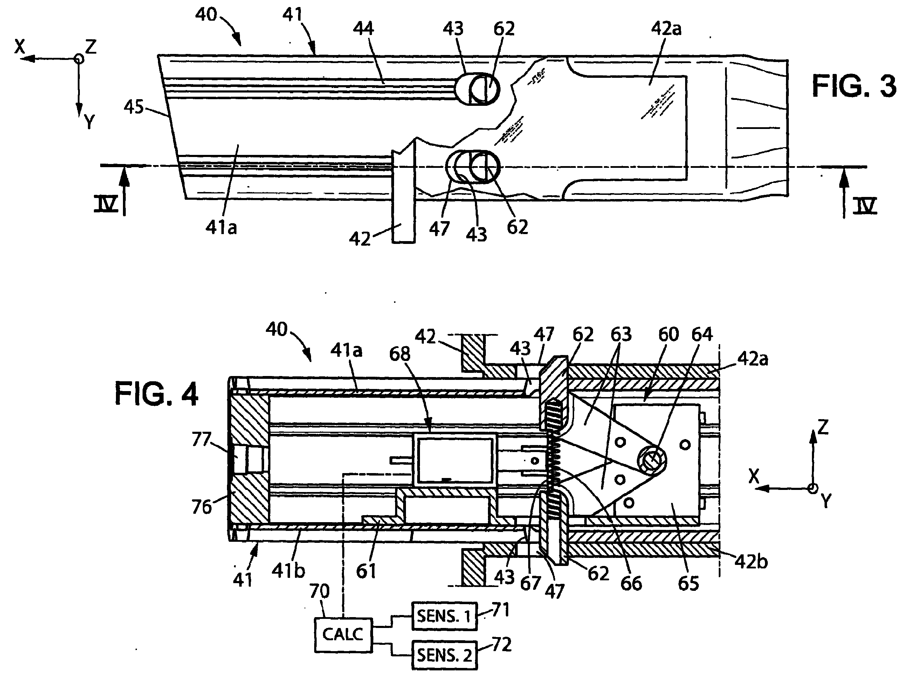

Comme représenté plus en détail sur les figures 3 et 4, le profilé déchirable 41 comprend par exemple, sur chacune de ses faces supérieure 41a et inférieure 41b :
- deux trous 43 qui présentent ici une forme oblongue allongée selon l'axe X,
- et deux lignes de faiblesse telles que par exemple des rainures longitudinales 44 s'étendant chacune selon l'axe X vers l'avant à partir d'un des trous 43, jusqu'à l'extrémité avant 45 du profilé déchirable 41.

Les ailes 42a, 42b de la platine 42 comportent par ailleurs des trous oblongs 47 qui, en position normale d'utilisation, sont disposés sensiblement en correspondance avec les trous 43 du profilé déchirable.

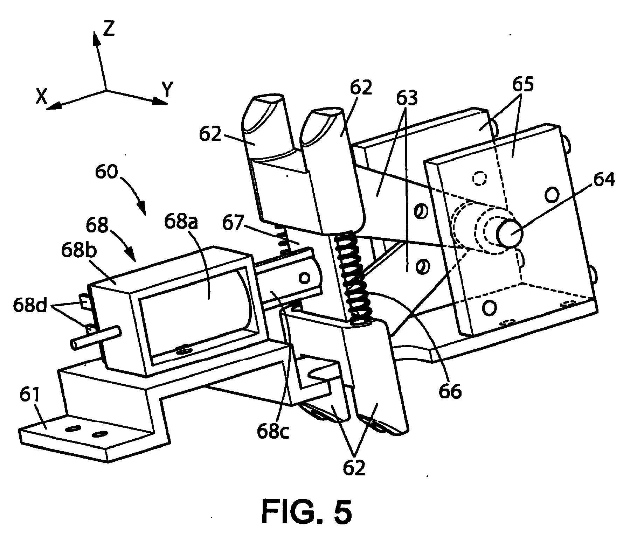

La structure de caisse 1 comporte en outre un dispositif de verrouillage 60, bien visible sur les figures 4 et 5, adapté pour verrouiller le profilé déchirable 41 aux ailes 42a, 42b de la platine 42.

Ce dispositif de verrouillage 60 est fixé à l'intérieur du profilé déchirable 41, par exemple au moyen d'une embase horizontale 61 portant deux flasques verticaux 65 à son extrémité arrière. La liaison entre l'embase 61 et le profilé déchirable 41, réalisée par exemple par rivetage, sertissage, clipsage autre, est adaptée pour se rompre relativement aisément en cas d'effort violent, comme il sera expliqué ci-après.

Le dispositif de verrouillage 60 comprend par exemple quatre doigts de verrouillage 62 qui, en position de verrouillage, traversent les trous susmentionnés 43, 47 appartenant respectivement au profilé déchirable 41 et des ailes 42a, 42b de la platine de fixation 42. Ces doigts 62 ont un diamètre extérieur plus large que les rainures longitudinales 44. Les doigts 62 sont répartis en :
- une paire supérieure de doigts 62, pénétrant dans les trous 43, 47 supérieurs, et solidaires d'un premier bras pivotant 63,
- et une paire inférieure de doigts 62, pénétrant dans les trous 43, 47 inférieurs, et solidaires d'un deuxième bras pivotant 63.

Les bras 63 pivotent en ciseau dans le plan X, Z et sont montés pivotants sur un même axe transversal 64 engagé dans des perçages des flasques 65. Les bras 63 s'étendent en divergeant vers l'avant, et sont sollicités élastiquement à l'écartement mutuel (ici par deux ressorts 66), de façon à maintenir normalement les doigts de verrouillage dans leur position de verrouillage où ils pénètrent dans les trous 43, 47.

Les doigts de verrouillage 62 sont donc montés dans le dispositif de verrouillage 60 initialement dans ladite position de verrouillage. Comme cela sera expliqué plus loin dans cette description, les doigts de verrouillage 62 restent dans cette position de verrouillage en l'absence d'un choc appliqué à l'une des première et deuxième parties de caisse.

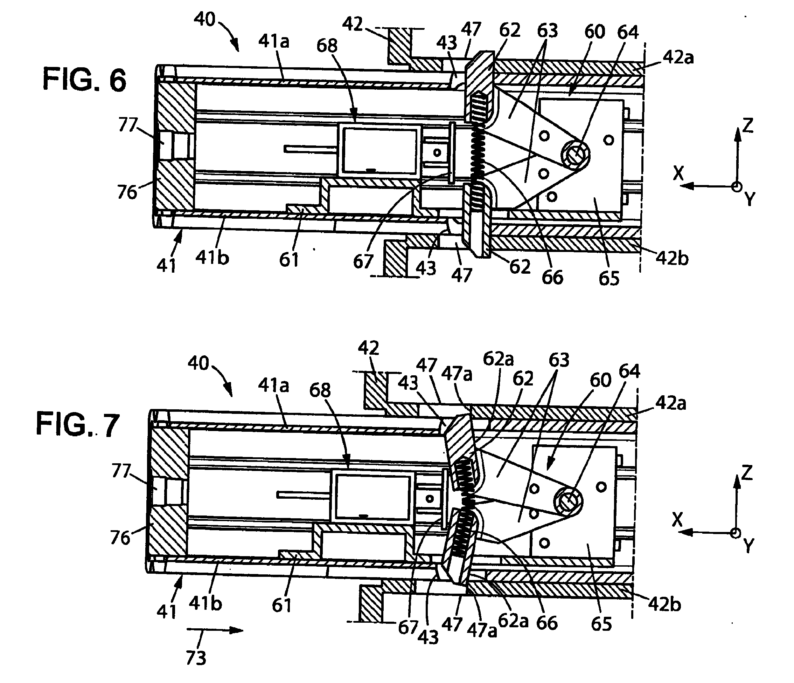

Le dispositif de verrouillage 60 comporte en outre :
- une cale de blocage 67 mobile entre une position active (figure 4) où ladite cale est disposée entre lesdits bras 63 en bloquant ainsi les doigts 62 en position de verrouillage, et une position inactive (figure 6) dans laquelle ladite cale 67 est retirée d'entre les bras 63 et débloque ainsi lesdits bras et les doigts 62 en permettant aux bras 63 de pivoter l'un vers l'autre jusqu'à une position déverrouillée des doigts 62, où lesdits doigts sont escamotés à l'intérieur du profilé déchirable 41,
- un actionneur 68 adapté pour déplacer ladite cale de blocage 67 entre ladite position active et ladite position inactive.

Lorsque la cale de blocage 67 est en position inactive, un espace est donc libéré pour le pivotement des bras 63 et des doigts 62. En conséquence, la cale de blocage 67 n'interfère pas avec lesdits bras 63 et doigts 62.

Tout actionneur 68 à deux positions peut convenir, qu'il soit par exemple électrique, pneumatique ou hydraulique.

L'actionneur 68 peut être par exemple un électroaimant comportant :
- une bobine 68a,
- une carcasse 68b liée à l'embase 61,
- un noyau magnétique 68c mobile en translation dans ladite bobine entre lesdites positions active et inactive, portant à l'extrémité dudit noyau ladite cale de blocage 67, et
- des cosses 68d permettant de connecter un câble électrique de commande, relié par exemple à un calculateur de bord 70 du véhicule (CALC. - voir figure 4) qui commande l'actionneur 68 en fonction des informations données par un ou plusieurs capteurs 71, 72 (SENS.1, SENS. 2).

Le calculateur de bord peut ainsi être relié à un capteur 71 de vitesse du véhicule (SENS. 1) et / ou à un capteur 72 adapté pour détecter un obstacle devant le véhicule (SENS. 2).

Le calculateur 70 peut par exemple être programmé pour :
- placer la cale de blocage 67 en position active (figure 4) lorsque la vitesse du véhicule est inférieure à une première limite, par exemple environ 20 km/h, ou supérieure à une deuxième limite, par exemple environ 40 km/h,
- et placer la cale de blocage 67 en position inactive (figure 6) lorsque la vitesse du véhicule est comprise entre les première et deuxième limites.

Alternativement, lorsque le calculateur 70 est connecté aux deux capteurs 71, 72 susmentionnés, il peut par exemple être programmé pour :
- placer la cale de blocage 67 en position active:
   - lorsque la vitesse du véhicule est inférieure à une première limite, par exemple 20 km/h, ou supérieure à une deuxième limite, par exemple 40 km/h,
   - ou lorsque la vitesse du véhicule est comprise entre les première et deuxième valeurs limites mais que le capteur 72 ne détecte pas un obstacle
- et placer la cale de blocage 67 en position inactive lorsque la vitesse du véhicule est comprise entre les première et deuxième limites et que le capteur 72 détecte un obstacle.

Enfin, comme on peut le voir sur la figure 1, un anneau de remorquage 74 du véhicule peut être fixé à la structure de caisse 1 d'un côté du véhicule, par exemple au travers d'un orifice 75 ménagé dans la poutre 30. Cet anneau de remorquage 74 peut par exemple être vissé dans un trou fileté 77 d'une douille 76 fixée à l'intérieur du tube déchirable 41, à son extrémité avant. La fixation de la douille 76 peut se faire par sertissage ou par tout autre moyen connu.

En variante, l'anneau de remorquage 75 pourrait se visser sur une douille (non représentée) solidaire de la platine 42. La douille en question peut par exemple être fixée derrière la partie frontale de la platine 42 et l'anneau de remorquage peut être vissé au travers d'un trou ménagé dans la partie frontale de ladite douille 42.

Le dispositif qui vient d'être décrit fonctionne comme suit.

Dans la position représentée sur les figures 3 à 5, où la cale de blocage 67 est en position active, les doigts de verrouillage sont bloqués en position de verrouillage. Dans ce premier état, si un choc se produit, la liaison entre l'embase 61 et le profilé déchirable 41 se rompt et les doigts 62, qui sont retenus dans les trous 47 de la platine 42, pénètrent dans les rainures longitudinales 44 du profilé déchirable 41 en les déchirant pour absorber l'énergie du choc. Cette configuration permet de rendre plus aisément réparables les conséquences des chocs à basse vitesse, et participe à l'absorption d'énergie dans les chocs à haute vitesse.

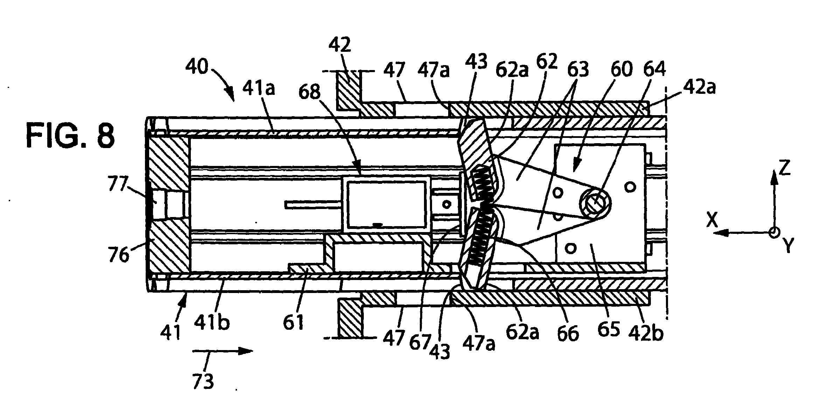

Dans la position représentée sur la figure 6, la cale de blocage 67 est en position inactive, tandis que les doigts de verrouillage 62 sont toujours en position de verrouillage. Dans ce deuxième état, si le véhicule rencontre un obstacle, par exemple un piéton, le choc repousse le pare-choc et les profilés de déchirement vers l'arrière, comme indiqué par la flèche 73 sur la figure 7. Au cours de ce mouvement, les bords arrière 47a des trous 47 ménagés dans les ailes 42a, 42b de la platine font pivoter les bras 63 l'un vers l'autre contre la sollicitation élastique des ressorts 66, en repoussant les bords arrière 62a des doigts de verrouillage 62 par effet de came. Les doigts 62 s'effacent alors complètement à l'intérieur du profilé déchirable 41, en position de déverrouillage (figure 8).

Ainsi, le profilé déchirable 41 peut se déplacer librement encore dans le sens de la flèche 73 jusqu'à une position de butée. Par conséquent, la partie supérieure du pare-choc 31 s'efface en offrant peu de résistance, ce qui est particulièrement avantageux en cas de choc piéton, pour protéger le piéton.

## Revendications

1. Structure de caisse de véhicule automobile comportant :
- des première et deuxième parties de caisse (30, 10) déplaçable l'une par rapport à l'autre dans une direction longitudinale (X),
- un absorbeur d'énergie (40) qui comprend un organe déchirable (41) lié à la première partie de caisse (30),
- un dispositif de verrouillage (60) comprenant au moins un organe de verrouillage (62) mobile entre :
- une position de verrouillage où ledit organe de verrouillage lie l'organe déchirable (41) à la deuxième partie de caisse (10) et où ledit organe de verrouillage est adapté pour déchirer l'organe déchirable en dissipant de l'énergie lors d'un choc appliqué à l'une des première et deuxième parties de caisse (30, 10) dans ladite direction longitudinale (X),
- et une position escamotée où ledit organe de verrouillage (62) permet un mouvement relatif entre ledit organe déchirable (41) et la deuxième partie de caisse (10) sans interférer avec l'organe déchirable,
ledit organe de verrouillage étant, initialement et en absence d'un choc appliqué à l'une (30) des première et deuxième parties de caisse, en position de verrouillage, et la structure de caisse étant **caractérisée en ce que** le dispositif de verrouillage (60) comporte en outre un organe de blocage (67) commandé pour se déplacer entre une position active où ledit organe de blocage (67) bloque l'organe de verrouillage (62) en position de verrouillage, et une position inactive où ledit organe de blocage (67) n'interfère pas avec l'organe de verrouillage (62) de telle sorte que l'organe de verrouillage reste en position de verrouillage en absence d'un choc appliqué à l'une (30) des première et deuxième parties de caisse.

2. Structure de caisse selon la revendication 1, dans laquelle l'organe de verrouillage est déplacable dans sa position escamotée sous l'effet d'un choc appliqué à l'une (30) des première et deuxième parties de caisse lorsque ledit organe de blocage est en position inactive.

3. Structure de caisse selon la revendication 2, dans laquelle l'organe de verrouillage (62) est sollicité élastiquement vers la position de verrouillage.

4. Structure de caisse selon la revendication 2 ou la revendication 3, dans laquelle l'organe de verrouillage (62) coopère par effet de came avec un élément (42a, 42b) solidaire d'une (10) des première et deuxième parties de caisse pour déplacer ledit organe de verrouillage (62) en position escamotée en cas de choc dans la direction longitudinale lorsque l'organe de blocage (67) est en position inactive.

5. Structure de caisse selon l'une quelconque des revendications précédentes, dans laquelle le dispositif de verrouillage (60) comprend au moins deux organes de verrouillage (62) solidaires de deux bras (63) montés pivotants en ciseaux autour d'un axe de rotation commun (64), lesdits bras (63) étant disposés pour se rapprocher l'un de l'autre lorsque les organes de verrouillage (62) se déplacent de la position de verrouillage à la position escamotée, et l'organe de blocage (67) étant disposé pour s'intercaler entre lesdits deux bras (63) pour bloquer les organes de verrouillage en position de verrouillage lorsque ledit organe de blocage est en positon de blocage.

6. Structure de caisse selon l'une quelconque des revendications précédentes, dans laquelle la première partie de caisse comprend une poutre transversale (30) de pare-choc s'étendant sensiblement perpendiculairement à la direction longitudinale et la deuxième partie de caisse comprend un brancard (10) s'étendant sensiblement dans ladite direction longitudinale.

7. Structure de caisse selon l'une quelconque des revendications précédentes, dans laquelle l'organe déchirable (41) comprend un profilé s'étendant dans la direction longitudinale (X), ledit organe déchirable comprenant au moins un trou (43) et au moins une ligne de faiblesse (44) s'étendant à partir du trou dans ladite direction longitudinale (X), l'organe de verrouillage (62) étant adapté pour pénétrer dans le trou (43) lorsqu'il est en position verrouillée, la ligne de faiblesse (44) étant adaptée pour être déchirée par ledit organe de verrouillage (62) en cas de choc appliqué à l'une (30) des première et deuxième parties de caisse dans la direction longitudinale (X).

8. Structure de caisse selon la revendication 7, dans laquelle l'organe de verrouillage (62) est adapté pour traverser le trou (43) de l'organe déchirable (41) et se verrouiller sur un organe de réception (42a, 42b) solidaire de la deuxième partie de caisse (10) lorsque ledit organe de verrouillage est en position de verrouillage.

9. Structure de caisse selon la revendication 8, dans laquelle l'organe déchirable (41) est un profilé creux et le dispositif de verrouillage (60) est disposé dans ledit organe déchirable (41).

10. Structure de caisse selon la revendication 9, dans laquelle le dispositif de verrouillage (60) est fixé à l'organe déchirable (41) par une liaison frangible.

11. Structure de caisse selon la revendication 10, dans laquelle :
- le dispositif de verrouillage (60) comprend au moins deux organes de verrouillage (62) solidaires de deux bras (63) montés pivotants en ciseaux autour d'un axe de rotation commun (64) solidaire d'un support (61, 65) lié à l'organe déchirable (41) par ladite liaison frangible, lesdits organes de verrouillage (62) et lesdits bras (63) étant disposés pour se rapprocher l'un de l'autre lorsque les organes de verrouillage se déplacent de la position de verrouillage à la position escamotée, l'organe de blocage (67) étant disposé pour s'intercaler entre lesdits deux bras pour les bloquer les organes de verrouillage en position de verrouillage lorsque ledit organe de blocage est en position de blocage,
- les organes de verrouillage (62) sont adaptés pour buter contre l'organe de réception (42a, 42b) lors d'un choc dans la direction longitudinale (X), dans un sens (73) tendant à rapprocher les deux bras (63) l'un de l'autre,
- et les organes de verrouillage (62) coopèrent par effet de came avec ledit organe de réception (42a, 42b) pour déplacer lesdits organes de verrouillage en position escamotée en cas de choc dans la direction longitudinale (X) lorsque l'organe de blocage (67) est en position inactive.

12. Structure de caisse selon l'une quelconque des revendications précédentes, dans laquelle le dispositif de verrouillage (60) comprend en outre un actionneur (68) adapté pour déplacer ledit organe de blocage (67), et ledit actionneur (68) comporte un électroaimant comportant un noyau magnétique (68c) mobile en translation et solidaire dudit organe de blocage (67).

13. Véhicule automobile comprenant une structure de caisse selon l'une des revendications précédentes, dans lequel le dispositif de verrouillage (60) comprend en outre un actionneur (68) adapté pour déplacer ledit organe de blocage (67), et dans lequel une électronique de commande (70) est reliée à au moins un capteur (71, 72) et commande ledit actionneur (68) pour que ledit organes de blocage (67) soit en position inactive sous certaines conditions de déblocage fonction d'informations recues dudit capteur (71, 72) et pour qu'il soit en position active sinon.

14. Véhicule automobile selon la revendication 13, dans lequel le capteur (71) est adapté pour mesurer une vitesse du véhicule et lesdites conditions de déblocage incluent au moins une condition de vitesse selon laquelle la vitesse du véhicule est comprise dans une plage de vitesse prédéterminée.

15. véhicule automobile selon la revendication 13, dans lequel ledit capteur est un détecteur d'obstacle (72) et lesdites conditions de déblocage incluent au moins une condition de détection d'obstacle selon laquelle un obstacle est détecté à proximité dudit véhicule.

## Claims

1. Motor car body structure comprising:
- first and second body sections (30, 10) which can be moved relative to each other in a longitudinal direction (X),
- an energy absorber (40) which comprises a tearable element (41) connected to the first body section (30),
- a locking device (60) comprising at least one locking element (62) which can be moved between:
- a locked position, in which said locking element connects the tearable element (41) to the second body section (10) and in which said locking element is adapted to tear the tearable element thereby dissipating energy at the time of an impact applied to one of the first and second body sections (30, 10) in said longitudinal direction (X),
- and a retracted position, in which said locking element (62) allows a relative movement between said tearable element (41) and the second body section (10) without interfering with the tearable element,
said locking element being, initially and in the absence of an impact being applied to one (30) of the first and second body sections, in the locked position and the body structure being **characterised in that** the locking device (60) also comprises an immobilising element (67) controlled so as to move between an active position, in which said immobilising element (67) immobilises the locking element (62) in the locked position, and an inactive position, in which said immobilising element (67) does not interfere with the locking element (62) in such a way that the locking element remains in the locked position in the absence of an impact being applied to one (30) of the first and second body sections.

2. Body structure according to claim 1, in which the locking element can be moved into its retracted position under the effect of an impact applied to one (30) of the first and second body sections when said immobilising element is in the inactive position.

3. Body structure according to claim 2, in which the locking element (62) is elastically loaded towards the locked position.

4. Body structure according to claim 2 or claim 3, in which the locking element (62) cooperates through a cam effect with an element (42a, 42b) which is integral with one (10) of the first and second body sections in order to move said locking element (62) into the retracted position in case of an impact in the longitudinal direction when the immobilising element (67) is in the inactive position.

5. Body structure according to any one of the preceding claims, in which the locking device (60) comprises at least two locking elements (62) that are integral with two arms (63) mounted so as to pivot in the manner of scissors about a common axis of rotation (64), said arms (63) being arranged so that they move towards each other when the locking elements (62) move from the locked position to the retracted position, and the immobilising element (67) being arranged so that it is inserted between said two arms (63) in order to immobilise the locking elements in the locked position when said immobilising element is in the immobilising position.

6. Body structure according to any one of the preceding claims, in which the first body section comprises a transverse bumper beam (30) extending essentially perpendicular to the longitudinal direction and the second body section comprises a girder member (10) extending essentially in said longitudinal direction.

7. Body structure according to any one of the preceding claims, in which the tearable element (41) comprises a profile extending in the longitudinal direction (X), said tearable element comprising at least one hole (43) and at least one line of weakness (44) extending from the hole in said longitudinal direction (X), the locking element (62) being adapted to penetrate the hole (43) when it is in the locked position, the line of weakness (44) being adapted to be torn by said locking element (62) in case of an impact being applied to one (30) of the first and second body sections in the longitudinal direction (X).

8. Body structure according to claim 7, in which the locking element (62) is adapted to cross the hole (43) of the tearable element (41) and to lock on a receiving element (42a, 42b) integral with the second body section (10) when said locking element is in the locked position.

9. Body structure according to claim 8, in which the tearable element (41) is a hollow profile and the locking device (60) is arranged in said tearable element (41).

10. Body structure according to claim 9, in which the locking device (60) is fixed to the tearable element (41) through a breakable connection.

11. Body structure according to claim 10, in which:
- the locking device (60) comprises at least two locking elements (62) integral with two arms (63) mounted so as to pivot in the manner of scissors about a common axis of rotation (64) integral with a support (61, 65) connected to the tearable element (41) by said breakable connection, said locking elements (62) and said arms (63) being arranged so that they move towards each other when the locking elements move from the locked position to the retracted position, the immobilising element (67) being arranged so that it is inserted between said two arms in order to immobilise the locking elements in the locked position when said immobilising element is in the immobilising position,
- the locking elements (62) are adapted to abut the receiving element (42a, 42b) in case of an impact in the longitudinal direction (X), in a direction (73) tending to bring the two arms (63) closer to one another,
- and the locking elements (62) cooperate through a cam effect with said receiving element (42a, 42b) in order to move said locking elements into the retracted position in case of an impact in the longitudinal direction (X) when the immobilising element (67) is in the inactive position.

12. Body section according to any one of the preceding claims, in which the locking device (60) also comprises an actuator (68) adapted to move said immobilising element (67) and said actuator (68) comprises an electromagnet consisting of a magnetic core (68c) which is mobile in translation and is integral with said immobilising element (67).

13. Motor car comprising a body structure according to one of the preceding claims, in which the locking device (60) also comprises an actuator (68) adapted to move said immobilising element (67), and in which an electronic control unit (70) is connected to at least one sensor (71, 72) and controls said actuator (68) so that said immobilising element (67) is in the inactive position under certain mobilisation conditions according to information received by said sensor (71, 72) and so that it is otherwise in the active position.

14. Motor car according to claim 13, in which the sensor (71) is adapted to measure the speed of the vehicle and said mobilisation conditions include at least one speed condition according to which the vehicle speed is within a predetermined speed range.

15. Motor car according to claim 13, in which said sensor is an obstacle detector (72) and said mobilisation conditions include at least one obstacle detection condition according to which an obstacle is detected in proximity to the vehicle.

## Patentansprüche

1. Karosseriestruktur eines Kraftfahrzeugs, die aufweist:
- erste und zweite Karosserieteile (30, 10), die zueinander in einer Längsrichtung (X) verschiebbar sind,
- einen Energieabsorber (40), der ein zerreißbares Organ (41) enthält, das mit dem ersten Karosserieteil (30) verbunden ist,
- eine Verriegelungsvorrichtung (60), die mindestens ein Verriegelungsorgan (62) enthält, das beweglich ist zwischen:
- einer Verriegelungsstellung, in der das Verriegelungsorgan das zerreißbare Organ (41) mit dem zweiten Karosserieteil (10) verbindet, und in der das Verriegelungsorgan geeignet ist, um das zerreißbare Organ zu zerreißen, indem bei einem auf das erste oder das zweite Karosserieteil (30, 10) in der Längsrichtung (X) ausgeübten Stoß Energie abgeführt wird,
- einer eingezogenen Stellung, in der das Verriegelungsorgan (62) eine relative Bewegung zwischen dem zerreißbaren Organ (41) und dem zweiten Karosserieteil (10) erlaubt, ohne mit dem zerreißbaren Organ zu interferieren,
wobei das Verriegelungsorgan anfangs und in Abwesenheit eines auf eines (30) der ersten und zweiten Karosserieteile ausgeübten Stoßes in der Verriegelungsstellung ist, und die Karosseriestruktur **dadurch gekennzeichnet ist, dass** die Verriegelungsvorrichtung (60) außerdem ein Blockierorgan (67) aufweist, das gesteuert wird, um sich zwischen einer aktiven Stellung, in der das Blockierorgan (67) das Verriegelungsorgan (62) in der Verriegelungsstellung blockiert, und einer inaktiven Stellung zu verschieben, in der das Blockierorgan (67) nicht mit dem Verriegelungsorgan (62) interferiert, so dass das Verriegelungsorgan in Abwesenheit eines auf eines (30) der ersten und zweiten Karosserieteile ausgeübten Stoßes in der Verriegelungsstellung bleibt.

2. Karosseriestruktur nach Anspruch 1, bei der das Verriegelungsorgan unter der Wirkung eines auf eines (30) der ersten und zweiten Karosserieteile ausgeübten Stoßes in seine eingezogene Stellung verschiebbar ist, wenn das Blockierorgan in der inaktiven Stellung ist.

3. Karosseriestruktur nach Anspruch 2, bei der das Verriegelungsorgan (62) elastisch in die Verriegelungsstellung beaufschlagt wird.

4. Karosseriestruktur nach Anspruch 2 oder Anspruch 3, bei der das Verriegelungsorgan (62) durch Nockenwirkung mit einem Element (42a, 42b) zusammenwirkt, das fest mit einem (10) der ersten und zweiten Karosserieteile verbunden ist, um das Verriegelungsorgan (62) im Fall eines Stoßes in Längsrichtung in die eingezogene Stellung zu verschieben, wenn das Blockierorgan (67) in der inaktiven Stellung ist.

5. Karosseriestruktur nach einem der vorhergehenden Ansprüche, bei der die Verriegelungsvorrichtung (60) mindestens zwei Verriegelungsorgane (62) aufweist, die fest mit zwei Armen (63) verbunden sind, die um eine gemeinsame Drehachse (64) scherenartig schwenkbar montiert sind, wobei die Arme (63) angeordnet sind, um sich einander anzunähern, wenn die Verriegelungsorgane (62) sich von der Verriegelungsstellung in die eingezogene Stellung verschieben, und das Blockierorgan (67) angeordnet ist, um sich zwischen die zwei Arme (63) einzufügen, um die Verriegelungsorgane in der Verriegelungsstellung zu blockieren, wenn das Verriegelungsorgan in der Blockierstellung ist.

6. Karosseriestruktur nach einem der vorhergehenden Ansprüche, bei der der erste Karosserieteil einen Stoßstangen-Querträger (30) enthält, der sich im Wesentlichen lotrecht zur Längsrichtung erstreckt, und der zweite Karosserieteil einen Längsträger (10) enthält, der sich im Wesentlichen in der Längsrichtung erstreckt.

7. Karosseriestruktur nach einem der vorhergehenden Ansprüche, bei der das zerreißbare Organ (41) ein Profilteil enthält, das sich in der Längsrichtung (X) erstreckt, wobei das zerreißbare Organ mindestens ein Loch (43) und mindestens eine Sollbruchlinie (44) enthält, die sich ausgehend von dem Loch in der Längsrichtung (X) erstreckt, wobei das Verriegelungsorgan (62) geeignet ist, um in das Loch (43) einzudringen, wenn es in der verriegelten Stellung ist, wobei die Sollbruchlinie (44) geeignet ist, um vom Verriegelungsorgan (62) im Fall eines Stoßes zerrissen zu werden, der auf eines (30) der ersten und zweiten Karosserieteile in Längsrichtung (X) ausgeübt wird.

8. Karosseriestruktur nach Anspruch 7, bei der das Verriegelungsorgan (62) geeignet ist, das Loch (43) des zerreißbaren Organs (41) zu durchqueren und sich auf einem Empfangsorgan (42a, 42b) zu verriegeln, das fest mit dem zweiten Karosserieteil (10) verbunden ist, wenn das Verriegelungsorgan in der Verriegelungsstellung ist.

9. Karosseriestruktur nach Anspruch 8, bei der das zerreißbare Organ (41) ein Hohlprofilteil ist und die Verriegelungsvorrichtung (60) in dem zerreißbaren Organ (41) angeordnet ist.

10. Karosseriestruktur nach Anspruch 9, bei der die Verriegelungsvorrichtung (60) am zerreißbaren Organ (41) durch eine zerbrechliche Verbindung befestigt ist.

11. Karosseriestruktur nach Anspruch 10, bei der:
- die Verriegelungsvorrichtung (60) mindestens zwei Verriegelungsorgane (62) enthält, die fest mit zwei Armen (63) verbunden sind, welche um eine gemeinsame Drehachse (64) scherenartig schwenkbar montiert sind, die fest mit einem Träger (61, 65) verbunden ist, der mit dem zerreißbaren Organ (41) durch die zerbrechliche Verbindung verbunden ist, wobei die Verriegelungsorgane (62) und die Arme (63) angeordnet sind, um sich einander anzunähern, wenn die Verriegelungsorgane sich von der Verriegelungsstellung in die eingezogene Stellung verschieben, wobei das Blockierorgan (67) angeordnet ist, um sich zwischen die zwei Arme einzufügen, um die Verriegelungsorgane in der Verriegelungsstellung zu blockieren, wenn das Blockierorgan in der Blockierstellung ist,
- die Verriegelungsorgane (62) geeignet sind, um bei einem Stoß in der Längsrichtung (X) in einer Richtung (73) gegen das Empfangsorgan (42a, 42b) anzuschlagen, die darauf abzielt, die zwei Arme (63) einander anzunähern,
- und die Verriegelungsorgane (62) durch Nockenwirkung mit dem Empfangsorgan (42a, 42b) zusammenwirken, um die Verriegelungsorgane im Fall eines Stoßes in der Längsrichtung (X) in die eingezogene Stellung zu verschieben, wenn das Blockierorgan (67) in der inaktiven Stellung ist.

12. Karosseriestruktur nach einem der vorhergehenden Ansprüche, bei der die Verriegelungsvorrichtung (60) außerdem ein Stellglied (68) enthält, das geeignet ist, um das Blockierorgan (67) zu verschieben, und das Stellglied (68) einen Elektromagnet aufweist, der einen Magnetkern (68c) aufweist, welcher translationsbeweglich und fest mit dem Blockierorgan (67) verbunden ist.

13. Kraftfahrzeug, das eine Karosseriestruktur nach einem der vorhergehenden Ansprüche enthält, bei dem die Verriegelungsvorrichtung (60) außerdem ein Stellglied (68) enthält, das geeignet ist, das Blockierorgan (67) zu verschieben, und bei dem eine Steuerelektronik (70) mit mindestens einem Sensor (71, 72) verbunden ist und das Stellglied (68) steuert, damit das Blockierorgan (67) unter bestimmten, von vom Sensor (71, 72) empfangenen Informationen abhängenden Freigabebedingungen in der inaktiven Stellung ist, und dass es sonst in der aktiven Stellung ist.

14. Kraftfahrzeug nach Anspruch 13, bei dem der Sensor (71) geeignet ist, eine Geschwindigkeit des Fahrzeugs zu messen, und die Freigabebedingungen mindestens eine Geschwindigkeitsbedingung enthalten, gemäß der die Geschwindigkeit des Fahrzeugs in einem vorbestimmten Geschwindigkeitsbereich enthalten ist.

15. Kraftfahrzeug nach Anspruch 13, bei dem der Sensor ein Hindernisdetektor (72) ist und die Freigabebedingungen mindestens eine Bedingung der Erfassung eines Hindernisses umfassen, gemäß der ein Hindernis in der Nähe des Fahrzeugs erfasst wird.
